# EUROPEAN PATENT APPLICATION

(11) **EP 4 783 422 A1**
(43) Date of publication of application: **29.07.2026**
(21) Application number: 25226236.5
(22) Date of filing: 22.12.2025
(51) Int. Cl.: H02K 3/12, H02K 3/28

(54) **STATOR**

(30) Priority: 27.01.2025 JP 2025011743
(71) Applicant: Toyota Jidosha Kabushiki Kaisha, Toyota-shi, Aichi-ken 471-8571 (JP)
(72) Inventor: OHIRA, Kengo, Toyota-shi, Aichi-ken, 471-8571 (JP)
(74) Representative: TBK

(57) **Abstract**

A stator (1) of the present disclosure includes: a stator core (2) including a plurality of slots (20) provided at intervals in a circumferential direction so as to each extend in a radial direction; and a plurality of segment coils (4) which each includes a pair of leg portions each inserted into a different one of the slots (20) and of which leading end portions of the corresponding leg portions are electrically joined together to provide a plurality of stator coils (3u, 3v, 3w). The segment coils (4) include a first segment coil (4a), a second segment coil (4b), and a third segment coil. On a side of the first end of the stator core (2), each two of the leg portions that protrude from a 2·i-th layer of one of the first slot and the second slot spaced five slots (20) apart and from a 2·i-1-th layer of the other one are twisted and joined together at leading end portions.

## Description

### BACKGROUND OF THE INVENTION

### 1. Field of the Invention

The present disclosure relates to a stator including a stator core that includes a plurality of slots and a plurality of stator coils that is wound on the stator core.

### 2. Description of Related Art

There has been hitherto a known stator including a stator core that includes a plurality of slots arrayed in a circumferential direction and three-phase (U-phase, V-phase, and W-phase) stator coils that are wound on the stator core (e.g., see Japanese Patent No. 5896250 (JP 5896250 B)). In this stator, the three-phase stator coils each include a multiple of 4 of parallel windings (parallel coils) connected in parallel, and are connected in Y-connection. Each parallel winding is provided by inserting a pair of linear portions (leg portions) of each of a plurality of U-shaped conductor segments (segment coils) into corresponding slots so as to protrude from a first end (twisting side) in an axial direction of the stator core, and twisting each linear portion in the circumferential direction and joining together leading end portions of each two of corresponding linear portions. Specifically, the conductor segments include a first conductor segment having the linear portions that are inserted into two first slots spaced five slots apart, a second conductor segment having the linear portions that are inserted into two second slots lying on each side of the first slots and spaced seven slots apart, and a third conductor segment having the linear portions that are inserted into predetermined first slot and second slot spaced six slots apart. The linear portions of the first conductor segment are inserted into a 2·i-1-th layer (in the example of JP 5896250 B, i = 3, 2, 1) of one of the two first slots that lies on one side (winding start side) in the circumferential direction and into a 2·i-th layer of the other one. The linear portions of the second conductor segment are inserted into a 2·i-1-th layer of one of the two second slots that lies on the one side in the circumferential direction and into a 2·i-th layer of the other one such that the second conductor segment straddles the corresponding first conductor segment. Further, the linear portions of the third conductor segment are inserted into a 2·i-th layer of one of the predetermined first slot and second slot spaced six slots apart that lies on the one side in the circumferential direction and into a 2·i + 1-th layer of the other one, and provide a crossover that straddles the border between the 2·1-th layer and the 2·i + 1-th layer on the side of a second end (opposite from the twisting side) of the stator core. On the side of the first end of the stator core, each two of linear portions that protrude from the 2·i-th layer of one of the two slots spaced six slots apart that lies on the one side in the circumferential direction and from the 2·i-1-th layer of the other one are twisted and joined together at their leading end portions. Thus, in each parallel winding, the linear portions of the conductor segments are evenly disposed in both the first slot and the second slot adjacent to each other in the circumferential direction, which can eliminate a deviation in the timing when an inductive voltage is generated in each magnetic pole of the parallel winding as a magnet of a rotor passes, thereby preventing generation of a circulating current in each parallel winding.

### SUMMARY OF THE INVENTION

In a rotating electrical machine including a stator like the above one described in JP 5896250 B, the output characteristics change according to the number of turns (hereinafter referred to as "the number of effective turns") that is obtained by dividing the number of linear portions (the number of layers) in one slot by the number of parallel windings (parallel number). In some cases, a stator having a non-integer number (e.g., 1.5 or 2.5) of turns is demanded from the side of a target for which the rotating electrical machine is installed. Even when the number of effective turns is not an integer, the stator described in JP 5896250 B can prevent generation of a circulating current among the parallel windings. In the stator described in JP 5896250 B, however, each of the stator coils is wound on the stator core by full-pitch winding, so that it is not easy to achieve a higher output of a rotating electrical machine including this stator or a reduction in vibration or noise of that rotating electrical machine.

In view of this, the present disclosure provides a stator that can inhibit generation of a circulating current even when the number of effective turns is not an integer, and that can achieve a higher output of a rotating electrical machine as well as a reduction in vibration and noise thereof.

A first aspect of the present disclosure relates to a stator including a stator core and a plurality of segment coils. The stator core includes a plurality of slots provided at intervals in a circumferential direction so as to each extend in a radial direction. The segment coils each include a pair of leg portions each inserted into a different one of the slots, and leading end portions of the corresponding leg portions are electrically joined together to provide a plurality of stator coils. In this stator, when the number of poles is "p" and the number of the slots is "n," n = 6·p is met. When an integer equal to or larger than 1 is "m," the stator coils each include 4·m parallel coils that are connected in parallel. An even number of the leg portions are inserted into each of the slots in a row in the radial direction. The segment coils include a first segment coil, a second segment coil, and a third segment coil. Here, (i) the first segment coil is inserted into a 2·i-1-th layer of one of two first slots spaced six slots apart that lies on one side in the circumferential direction and into a 2·i-th layer of the other one such that the leg portions protrude from a first end of the stator core. Here, "i" is an integer equal to or larger than 1 and i = 1, ..., imax. (ii) The second segment coil is inserted into a 2·i-1-th layer of one of two second slots lying on each side of the first slots and spaced eight slots apart that lies on the one side in the circumferential direction and into a 2·i-th layer of the other one such that the leg portions protrude from the first end of the stator core, and straddles the corresponding first segment coil. (iii) The third segment coil is inserted into a 2·i-th layer of one of predetermined first slot and second slot spaced seven slots apart that lies on the other side opposite from the one side in the circumferential direction and into a 2·i + 1-th layer of the other one such that the leg portions protrude from the first end of the stator core, and provides a crossover between the 2·i-th layer and the 2·i + 1-th layer. On a side of the first end of the stator core, each two of the leg portions that protrude from the 2·i-th layer of one of the first slot and the second slot spaced five slots apart and from the 2·i-1-th layer of the other one are twisted and joined together at leading end portions.

In the stator of the first aspect of the present disclosure, the segment coils may include a plurality of fourth segment coils that is each inserted into a first layer or a 2·imax-th layer of a predetermined first slot or second slot so as to protrude from both ends of the stator core. On the side of the first end of the stator core, each two of the fourth segment coil and the leg portion that protrude from the first slot and the second slot spaced five slots apart may be twisted and joined together at leading end portions. Some of the fourth segment coils may protrude from a second end opposite from the first end of the stator core and be connected to a power line through which electricity is applied.

In the stator configured as described above, the stator coils may be connected in Y-connection. Some of the fourth segment coils may protrude from the second end of the stator core and be connected to a neutral point.

In the stator configured as described above, the stator coils may be connected in delta connection. Some of the fourth segment coils may protrude from the second end of the stator core and be connected to a neutral point.

In the stator configured as described above, the stator coils may be connected in open delta connection. Some of the fourth segment coils may protrude from the second end of the stator core and be connected to a neutral point.

In the stator of the first aspect of the present disclosure, a combination of the number of layers 2·imax in the slot and the number of the parallel coils 4·m may be one of (6, 4), (10, 4), (14, 4), and (12, 8).

In the stator of the first aspect as described above, each parallel coil is basically provided by inserting each second segment coil into two second slots spaced eight slots apart so as to straddle the first segment coil that is inserted in two first slots spaced six slots apart, and joining the corresponding leg portions together at a five-slot pitch on the side of the first end of the stator core. Thus, even when the number of effective turns is not an integer, a circulating current that is generated due to a deviation in the timing when an inductive voltage is generated in each magnetic pole of the parallel coil as a magnet of a rotor passes can be canceled inside each parallel winding to inhibit the circulating current from flowing through the stator coil. In the stator of the first aspect, the leg portions of the first to third segment coils that provide one-phase stator coil are inserted into sets of three slots adjacent to one another in the circumferential direction, and each of the stator coils is wound on the stator core by short-pitch winding. Thus, a rotating electrical machine including this stator can achieve a higher output as well as a reduction in vibration and noise compared with a rotating electrical machine including a stator in which stator coils are wound on a stator core by full-pitch winding, and can eliminate the need for skew etc., for reducing torque ripple. As a result, even when the number of effective turns is not an integer, the stator of the first aspect can inhibit generation of a circulating current and achieve a higher output of a rotating electrical machine as well as a reduction in vibration and noise thereof.

A second aspect of the present disclosure relates to a stator including a stator core and a plurality of segment coils. The stator core includes a plurality of slots provided at intervals in a circumferential direction so as to each extend in a radial direction. The segment coils each include a pair of leg portions each inserted into a different one of the slots, and leading end portions of the corresponding leg portions are electrically joined together to provide a plurality of stator coils. In this stator, when the number of poles is "p" and the number of the slots is "n," n = 6·p is met. When an integer equal to or larger than 1 is "m," the stator coils each include 4·m parallel coils that are connected in parallel. An even number of the leg portions are inserted into each of the slots in a row in the radial direction. The segment coils include a first segment coil, a second segment coil, and a third segment coil. Here, (i) the first segment coil is inserted into a 2·i-1-th layer of one of two first slots spaced four slots apart that lies on one side in the circumferential direction and into a 2·i-th layer of the other one such that the leg portions protrude from a first end of the stator core. Here, "i" is an integer equal to or larger than 1 and i = 1, ..., imax. (ii) The second segment coil is inserted into a 2·i-1-th layer of one of two second slots lying on each side of the first slots and spaced six slots apart that lies on the one side in the circumferential direction and into a 2·i-th layer of the other one such that the leg portions protrude from the first end of the stator core, and straddles the corresponding first segment coil. (iii) The third segment coil is inserted into a 2·i-th layer of one of predetermined first slot and second slot spaced five slots apart that lies on the other side opposite from the one side in the circumferential direction and into a 2·i + 1-th layer of the other one such that the leg portions protrude from the first end of the stator core, and provides a crossover between the 2·i-th layer and the 2·i + 1-th layer. On a side of the first end of the stator core, each two of the leg portions that protrude from the 2·i-th layer of one of the first slot and the second slot spaced seven slots apart and from the 2·i-1-th layer of the other one are twisted and joined together at leading end portions.

In the stator of the second aspect of the present disclosure, the segment coils may include a plurality of fourth segment coils that is each inserted into a first layer or a 2·imax-th layer of a predetermined first slot or second slot so as to protrude from both ends of the stator core. On the side of the first end of the stator core, each two of the fourth segment coil and the leg portion that protrude from the first slot and the second slot spaced five slots apart may be twisted and joined together at leading end portions. Some of the fourth segment coils may protrude from a second end opposite from the first end of the stator core and be connected to a power line through which electricity is applied.

In the stator configured as described above, the stator coils may be connected in Y-connection. Some of the fourth segment coils may protrude from the second end of the stator core and be connected to a neutral point.

In the stator configured as described above, the stator coils may be connected in delta connection. Some of the fourth segment coils may protrude from the second end of the stator core and be connected to a neutral point.

In the stator configured as described above, the stator coils may be connected in open delta connection. Some of the fourth segment coils may protrude from the second end of the stator core and be connected to a neutral point.

In the stator of the second aspect of the present disclosure, a combination of the number of layers 2·imax in the slot and the number of the parallel coils 4·m may be one of (6, 4), (10, 4), (14, 4), and (12, 8).

In the stator of the second aspect as described above, each of the parallel coils is basically provided by inserting each second segment coil into two second slots spaced six slots apart so as to straddle the first segment coil that is inserted in two first slots spaced four slots apart, and joining the corresponding leg portions together at a seven-slot pitch on the side of the first end of the stator core. In this way, even when the number of effective turns is not an integer, a circulating current generated due to a deviation in the timing when an inductive voltage is generated in each magnetic pole of the parallel coils as a magnet of a rotor passes can be canceled inside each of the parallel windings to inhibit the circulating current from flowing through the stator coils. In the stator of the second aspect, the leg portions of the first to third segment coils that provide one-phase stator coil are inserted into sets of three slots adjacent to one another in the circumferential direction, and each of the stator coils is wound on the stator core by short-pitch winding. Thus, a rotating electrical machine including this stator can achieve a higher output and a reduction in vibration and noise compared with a rotating electrical machine including a stator in which stator coils are wound on a stator core by full-pitch winding. In addition, this stator can eliminate the need for skew etc., for reducing torque ripple. As a result, even when the number of effective turns is not an integer, the stator of the present disclosure can inhibit generation of a circulating current and achieve a higher output of a rotating electrical machine as well as a reduction in vibration and noise thereof.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view showing a stator according to one embodiment of the present disclosure;
FIG. 2 is a schematic view showing one example of stator coils of the stator of the present disclosure;
FIG. 3 is a schematic configuration view showing segment coils providing the stator coils of the stator of the present disclosure;
FIG. 4 is an explanatory view illustrating an aspect of mounting of the segment coils onto the stator core of the stator of the present disclosure;
FIG. 5 is a plan view showing the stator of the present disclosure;
FIG. 6 is a schematic view showing another stator coil that can be adopted for the stator of the present disclosure; and
FIG. 7 is an explanatory view illustrating another aspect of mounting of the segment coils onto the stator core of the stator of the present disclosure.

### DETAILED DESCRIPTION OF EMBODIMENTS

Next, a mode for implementing the invention of the present disclosure will be described with reference to the drawings.

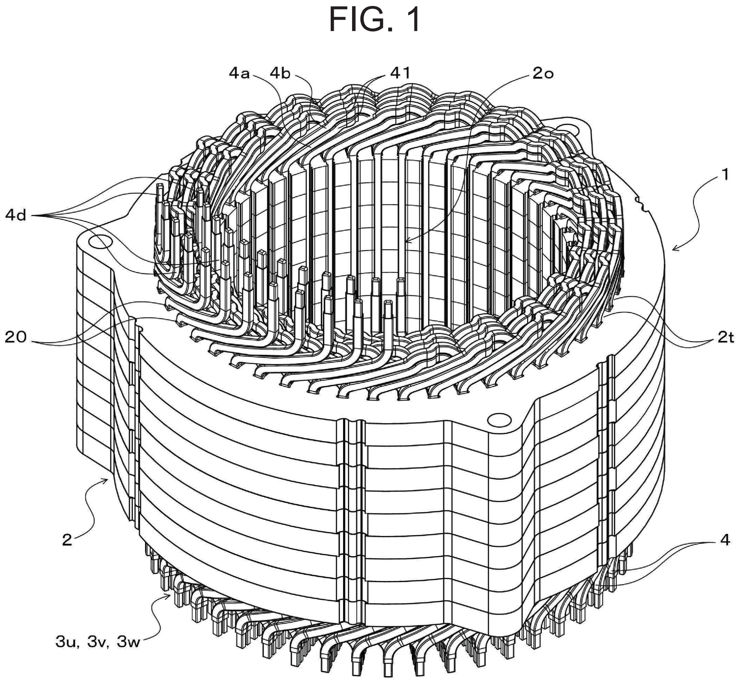

FIG. 1 is a perspective view showing a stator 1 of the present disclosure. Together with a rotor (not shown), the stator 1 shown in this view compose a three-phase alternating-current electric motor (rotating electrical machine) to be used as a travel drive source or a power generator of, for example, a battery electric vehicle or a hybrid electric vehicle. In this embodiment, the stator 1 includes an annular stator core 2, a stator coil 3u (U-phase coil), a stator coil 3v (V-phase coil), and a stator coil 3w (W-phase coil).

The stator core 2 of the stator 1 is provided in an annular shape by, for example, stacking a plurality of magnetic steel sheets, each provided in a substantially ring shape, and coupling them together in the stacking direction by pressing, or by, for example, pressure-forming and sintering a ferromagnetic powder. As shown in FIG. 1, the stator core 2 includes a center hole 2o in which the rotor is disposed, a plurality of teeth portions 2t that extends in a radial direction from an annular outer circumferential portion (yoke portion) toward a shaft center and lies adjacent to one another at regular intervals in the circumferential direction, and a plurality of (in this embodiment, for example, 48) slots 20 that is each provided between adjacent teeth portions 2t. The slots 20 each extend in the radial direction of the stator core 2, are arrayed in the circumferential direction at regular intervals, and open to the center hole 2o. In each slot 20, an insulator (insulating paper; not shown) is disposed. Further, in the stator 1, the same number of magnetic poles as the number of magnetic poles of the rotor (in this embodiment, eight) are provided, and when the number of the magnetic poles (pole number) of the stator 1 is "p" and the number of the slots 20 is "n," a relationship n = 6·p holds true.

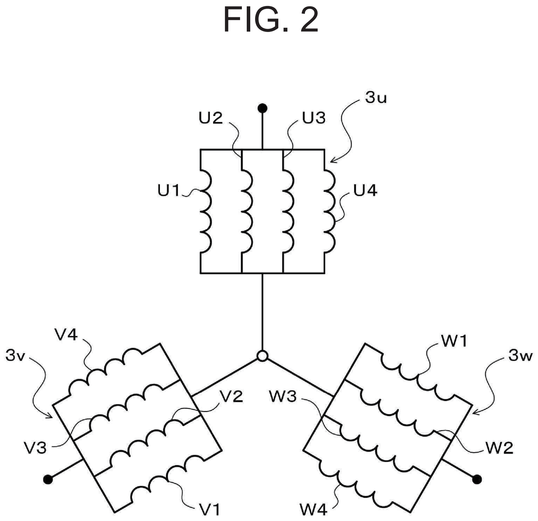

The stator coils 3u, 3v, 3w are each provided by electrically joining a plurality of segment coils (coil wire rods) 4 together. As shown in FIG. 2, the stator coil 3u includes four parallel coils U1, U2, U3, and U4 that are electrically connected in parallel. The stator coil 3v includes four parallel coils V1, V2, V3, and V4 that are electrically connected in parallel to one another, and the stator coil 3w includes four parallel coils W1, W2, W3, and W4 that are electrically connected in parallel to one another. As shown in FIG. 2, the stator coils 3u, 3v, 3w are connected to one another in Y-connection. That is, the parallel coils U1 to U4, V1 to V4, and W1 to W4 are connected to one another in so-called 4Y-connection. Here, also called "star connection," Y-connection is one of connection methods in three-phase alternating-current circuits. In Y-connection, terminals of the respective phases are connected to a center point and each have different voltage characteristics.

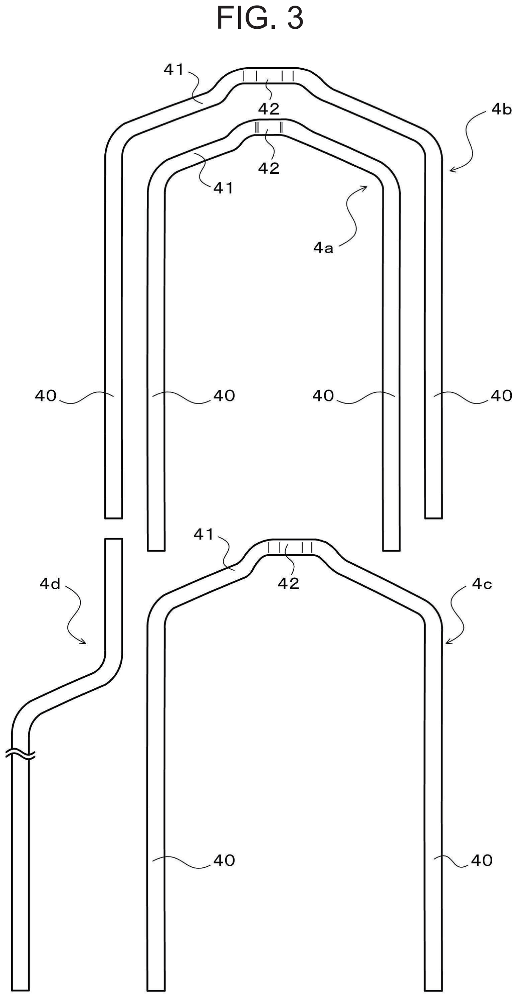

The segment coil 4 is an electric conductor formed by, for example, bending a rectangular wire, having an enamel-resin insulation film formed on its surface, in a flatwise direction and an edgewise direction. In this embodiment, as shown in FIG. 3, the segment coils 4 include a first segment coil 4a, a second segment coil 4b, a third segment coil 4c, and a fourth segment coil 4d. The first to third segment coils 4a, 4b, 4c are formed in a substantially U-shape, and each include a pair of (two) leg portions 40 and a crossover portion 41 that connects the leg portions 40 to each other. In the crossover portions 41 of the first to third segment coils 4a, 4b, 4c, a crank portion 42 is provided so as to extend obliquely between two flatwise bent portions. The two leg portions 40 of each of the first to third segment coils 4a, 4b, 4c are each inserted into a different slot 20 from the side of a second end of the stator core 2 so as to protrude from a first end (the lower end in FIG. 1) of the stator core 2, and the crossover portions 41 of the first to third segment coils 4a, 4b, 4c are arrayed on the side of the second end of the stator core 2. The fourth segment coil 4d is formed in a substantially S-shape, and includes both end portions that extend straight and parallel to each other and an oblique portion that extends between both end portions obliquely along the crossover portions 41 of the first and second segment coils 4a, 4b.

In this embodiment, the first to fourth segment coils 4a, 4b, 4c, 4d are mounted onto the stator core 2 such that an even number of (in this embodiment, six) leg portions 40 and fourth segment coils 4d protrude from each of the slots 20 so as to be adjacent to one another in the radial direction, and each of a plurality of layers is provided by the leg portions 40 etc., that protrude from the respective slots 20 and lie adjacent to one another in the circumferential direction of the stator core 2. Hereinafter, a layer of the leg portions 40 (leading end portions) etc., lying adjacent to one another in the circumferential direction on an outermost circumferential side of the stator core 2 will be referred to as a "first layer"; layers on a radially inner side will be referred to sequentially as a "second layer," a "third layer," and so on; and a layer of the leg portions 40 lying adjacent to one another on an innermost circumferential side will be referred to as a "sixth layer." The number of "layers" in the stator 1 matches the number of the leg portions 40 arrayed in each slot 20.

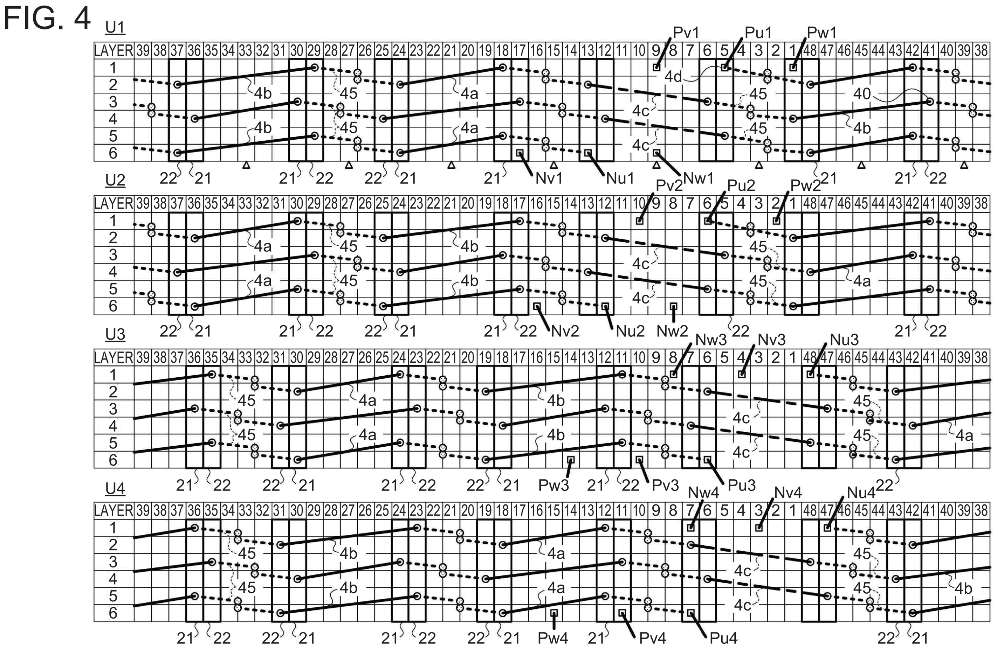

Subsequently, an aspect of mounting of the first to third segment coils 4a, 4b, 4c onto the stator core 2 will be described with reference to FIG. 4, by taking the stator coil 3u as an example. As shown in FIG. 4, the leg portions 40 of each first segment coil 4a (see the circles in FIG. 4) are inserted into a 2·i-1-th layer (where "i" is an integer equal to or larger than 1 and i = 1, ..., imax (in this embodiment, imax = 3)) of one of two first slots 21 spaced six slots apart that lies on one side (winding end side) in the circumferential direction and into a 2·i-th layer of the other one from the side of the second end of the stator core 2 (the near side of the sheet plane of FIG. 4) so as to protrude from the first end of the stator core 2 (the far side of the sheet plane of FIG. 4).

More specifically, as shown in FIG. 4, the leg portions 40 of the first segment coils 4a that provide the parallel coil U1 of the stator coil 3u are inserted into the first layer of the slot No. 42 and the second layer of the slot No. 48; the first layer of the slot No. 18 and the second layer of the slot No. 24; the third layer of the slot No. 30 and the fourth layer of the slot No. 36; the fifth layer of the slot No. 42 and the sixth layer of the slot No. 48; and the fifth layer of the slot No. 18 and the sixth layer of the slot No. 24. As shown in FIG. 4, the leg portions 40 of the first segment coils 4a that provide the parallel coil U2 are inserted into the first layer of the slot No. 30 and the second layer of the slot No. 36; the third layer of the slot No. 42 and the fourth layer of the slot No. 48; the third layer of the slot No. 18 and the fourth layer of the slot No. 24; and the fifth layer of the slot No. 30 and the sixth layer of the slot No. 36.

Further, as shown in FIG. 4, the leg portions 40 of the first segment coils 4a that provide the parallel coil U3 are inserted into the first layer of the slot No. 24 and the second layer of the slot No. 30; the third layer of the slot No. 36 and the fourth layer of the slot No. 42; the third layer of the slot No. 12 and the fourth layer of the slot No. 18; and the fifth layer of the slot No. 24 and the sixth layer of the slot No. 30. As shown in FIG. 4, the leg portions 40 of the first segment coils 4a that provide the parallel coil U4 are inserted into the first layer of the slot No. 36 and the second layer of the slot No. 42; the first layer of the slot No. 12 and the second layer of the slot No. 18; the third layer of the slot No. 24 and the fourth layer of the slot No. 30; the fifth layer of the slot No. 36 and the sixth layer of the slot No. 42; and the fifth layer of the slot No. 12 and the sixth layer of the slot No. 18.

The leg portions 40 of each second segment coil 4b (see the circles in FIG. 4) are inserted into a 2·i-1-th layer of one of two second slots 22 lying on each side of the first slots 21 and spaced eight slots apart that lies on the one side (winding end side) in the circumferential direction and into a 2·i-th layer of the other one from the side of the second end of the stator core 2 so as to protrude from the first end of the stator core 2, and the crossover portion 41 of each second segment coil 4b straddles the crossover portion 41 of the corresponding first segment coil 4a (see FIG. 1). More specifically, as shown in FIG. 4, the leg portions 40 of the second segment coils 4b that provide the parallel coil U1 of the stator coil 3u are inserted into the first layer of the slot No. 29 and the second layer of the slot No. 37; the third layer of the slot No. 41 and the fourth layer of the slot No. 1; the third layer of the slot No. 17 and the fourth layer of the slot No. 25; and the fifth layer of the slot No. 29 and the sixth layer of the slot No. 37. As shown in FIG. 4, the leg portions 40 of the second segment coils 4b that provide the parallel coil U2 are inserted into the first layer of the slot No. 41 and the second layer of the slot No. 1; the first layer of the slot No. 17 and the second layer of the slot No. 25; the third layer of the slot No. 29 and the fourth layer of the slot No. 37; the fifth layer of the slot No. 41 and the sixth layer of the slot No. 1; and the fifth layer of the slot No. 17 and the sixth layer of the slot No. 25.

Further, as shown in FIG. 4, the leg portions 40 of the second segment coils 4b that provide the parallel coil U3 are inserted into the first layer of the slot No. 35 and the second layer of the slot No. 43; the first layer of the slot No. 11 and the second layer of the slot No. 19; the third layer of the slot No. 23 and the fourth layer of the slot No. 31; the fifth layer of the slot No. 35 and the sixth layer of the slot No. 43; and the fifth layer of the slot No. 11 and the sixth layer of the slot No. 19. As shown in FIG. 4, the leg portions 40 of the second segment coils 4b that provide the parallel coil U4 are inserted into the first layer of the slot No. 23 and the second layer of the slot No. 31; the third layer of the slot No. 35 and the fourth layer of the slot No. 43; the third layer of the slot No. 11 and the fourth layer of the slot No. 19; and the fifth layer of the slot No. 23 and the sixth layer of the slot No. 31.

The leg portions 40 of each third segment coil 4c (see the circles in FIG. 4) are inserted into a 2·i-th layer of one of predetermined first slot 21 and second slot 22 spaced seven slots apart that lies on the other side (winding start side) opposite from the one side in the circumferential direction and into a 2·i + 1-th layer of the other one so as to protrude from the first end of the stator core 2, and each third segment coil 4c provides a crossover between the 2·i-th layer and the 2·i + 1-th layer. That is, the parallel coil U1 of the stator coil 3u includes two third segment coils 4c. As shown in FIG. 4, the leg portions 40 of one of the third segment coils 4c of the parallel coil U1 are inserted into the second layer of the slot No. 13 and the third layer of the slot No. 6 and provide a crossover between the second layer (2·i-th layer) and the third layer (2·i + 1-th layer). As shown in FIG. 4, the leg portions 40 of the other one of the third segment coils 4c of the parallel coil U1 are inserted into the fourth layer of the slot No. 12 and the fifth layer of the slot No. 5 and provide a crossover between the fourth layer (2·i-th layer) and the fifth layer (2·i + 1-th layer).

The parallel coil U2 of the stator coil 3u includes two third segment coils 4c. As shown in FIG. 4, the leg portions 40 of one of the third segment coils 4c of the parallel coil U2 are inserted into the second layer of the slot No. 12 and the third layer of the slot No. 5 and provide a crossover between the second layer (2·i-th layer) and the third layer (2·i + 1-th layer). As shown in FIG. 4, the leg portions 40 of the other one of the third segment coils 4c of the parallel coil U2 are inserted into the fourth layer of the slot No. 13 and the fifth layer of the slot No. 6 and provide a crossover between the fourth layer (2·i-th layer) and the fifth layer (2·i + 1-th layer). The parallel coil U3 of the stator coil 3u includes two third segment coils 4c. As shown in FIG. 4, the leg portions 40 of one of the third segment coils 4c of the parallel coil U3 are inserted into the second layer of the slot No. 6 and the third layer of the slot No. 47 and provide a crossover between the second layer (2·i-th layer) and the third layer (2·i + 1-th layer). As shown in FIG. 4, the leg portions 40 of the other one of the third segment coils 4c of the parallel coil U3 are inserted into the fourth layer of the slot No. 7 and the fifth layer of the slot No. 48 and provide a crossover between the fourth layer (2·i-th layer) and the fifth layer (2·i + 1-th layer). The parallel coil U4 of the stator coil 3u includes two third segment coils 4c. As shown in FIG. 4, the leg portions 40 of one of the third segment coils 4c of the parallel coil U4 are inserted into the second layer of the slot No. 7 and the third layer of the slot No. 48 and provide a crossover between the second layer (2·i-th layer) and the third layer (2·i + 1-th layer). As shown in FIG. 4, the leg portions 40 of the other one of the third segment coils 4c of the parallel coil U4 are inserted into the fourth layer of the slot No. 6 and the fifth layer of the slot No. 47 and provide a crossover between the fourth layer (2·i-th layer) and the fifth layer (2·i + 1-th layer).

The first to third segment coils 4a, 4b, 4c providing the parallel coils V1 to V4 of the stator coil 3v are mounted so as to be offset by four slots in the circumferential direction (leftward in FIG. 4) with respect to the first to third segment coils 4a, 4b, 4c providing the parallel coils U1 to U4 of the U-phase. The first to third segment coils 4a, 4b, 4c providing the parallel coils W1, W2 of the stator coil 3w are mounted so as to be offset by four slots toward the opposite side from the parallel coils V1, V2 (rightward in FIG. 4) in the circumferential direction with respect to the first to third segment coils 4a, 4b, 4c providing the parallel coils U1, U2 of the U-phase. Further, the first to third segment coils 4a, 4b, 4c providing the parallel coils W3, W4 of the stator coil 3w are mounted so as to be offset by four slots toward the opposite side from the parallel coils U1, U2 (leftward in FIG. 4) in the circumferential direction with respect to the first to third segment coils 4a, 4b, 4c providing the parallel coils V3, V4 of the V-phase.

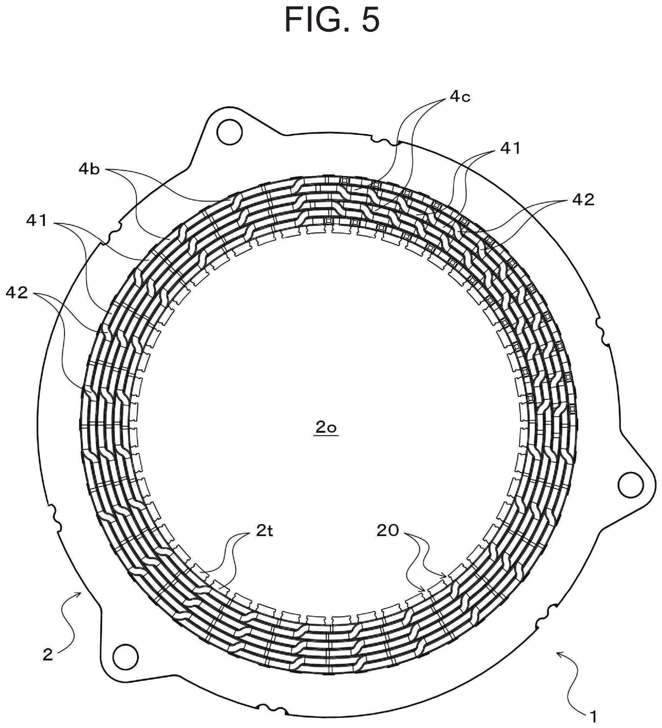

As can be seen from FIG. 4, the inclination directions of the crossover portions 41 (crank portions 42) of the first and second segment coils 4a, 4b with respect to the radial direction of the stator core 2 are the same directions. On the other hand, as shown in FIG. 4 and FIG. 5, the inclination directions of the crossover portions 41 (crank portions 42) of the third segment coils 4c with respect to the radial direction of the stator core 2 are opposite directions from the first and second segment coils 4a, 4b. As can be seen from FIG. 4 and FIG. 5, in this embodiment, the first and second segment coils 4a, 4b include three types of segment coils that are different from one another in the interval of the leg portions 40 in the circumferential direction etc., and the third segment coils 4c include two types of segment coils that are different from each other in the interval of the leg portions 40 in the circumferential direction etc.

Each fourth segment coil 4d (see the squares in FIG. 4) is inserted into the first layer or the sixth layer (2·imax-th layer) of a predetermined first slot 21 or second slot 22 so as to protrude from both ends of the stator core 2. In this embodiment, the parallel coils U1 to U4, V1 to V4, W1 to W4 of the stator coil 3u each include two fourth segment coils 4d. The fourth segment coils 4d of the parallel coil U1 are inserted into the first layer of the slot No. 5 and the sixth layer of the slot No. 13. The fourth segment coils 4d of the parallel coil U2 are inserted into the first layer of the slot No. 6 and the sixth layer of the slot No. 12. The fourth segment coils 4d of the parallel coil U3 are inserted into the first layer of the slot No. 48 and the sixth layer of the slot No. 6. The fourth segment coils 4d of the parallel coil U4 are inserted into the first layer of the slot No. 47 and the sixth layer of the slot No. 7.

The fourth segment coils 4d of the parallel coil V1 are inserted into the first layer of the slot No. 9 and the sixth layer of the slot No. 17. The fourth segment coils 4d of the parallel coil V2 are inserted into the first layer of the slot No. 10 and the sixth layer of the slot No. 16. The fourth segment coils 4d of the parallel coil V3 are inserted into the first layer of the slot No. 4 and the sixth layer of the slot No. 10. The fourth segment coils 4d of the parallel coil V4 are inserted into the first layer of the slot No. 3 and the sixth layer of the slot No. 11. The fourth segment coils 4d of the parallel coil W1 are inserted into the first layer of the slot No. 1 and the sixth layer of the slot No. 9. The fourth segment coils 4d of the parallel coil W2 are inserted into the first layer of the slot No. 2 and the sixth layer of the slot No. 8. The fourth segment coils 4d of the parallel coil W3 are inserted into the first layer of the slot No. 8 and the sixth layer of the slot No. 14. The fourth segment coils 4d of the parallel coil W4 are inserted into the first layer of the slot No. 7 and the sixth layer of the slot No. 15.

After completion of mounting of the first to fourth segment coils 4a, 4b, 4c, 4d onto the stator core 2, the leg portions 40 of the first to third segment coils 4a, 4b, 4c and the fourth segment coils 4d that protrude from the first end (twisting side) of the stator core 2 are subjected to a twisting process using a twisting device (not shown). In this embodiment, the leg portions 40 of each of the first to third segment coils 4a, 4b, 4c are twisted toward opposite sides (see the broken lines in FIG. 4) so as to be away from each other in the circumferential direction. A portion of each fourth segment coil 4d that protrudes from the first end (twisting side) of the stator core 2 is twisted toward the leg portion 40 of the corresponding first or second segment coil 4a or 4b that is twisted after protruding from one of the first slot 21 and the second slot 22 spaced five slots apart.

Further, as can be seen from FIG. 4, on the side of the first end of the stator core 2, the leading end portions of each two of the leg portions 40 of the first to third segment coils 4a, 4b, 4c that are twisted after protruding from the 2·i-th layer of one of the first slot 21 and the second slot 22 spaced five slots apart that lies on the one side (winding end side) in the circumferential direction and from the 2·i-1-th layer of the other one (e.g., the second layer of the slot No. 13 and the first layer of the slot No. 18) are electrically joined together by welding (e.g., laser welding). On the side of the first end of the stator core 2, the leading end portions of each two of the fourth segment coil 4d and the leg portion 40 that are twisted after protruding from the first slot 21 and the second slot 22 spaced five slots apart are electrically joined together by welding. Before the welding, the insulation film is removed from the leading end portion of each leg portion 40 etc., so as to expose the conductor.

Thus, a plurality of crossover portions 45 that each connects the leading end portions of the corresponding two leg portions 40 of the first to third segment coils 4a, 4b, 4c is provided on the side of the first end of the stator core 2. As can be seen from FIG. 4, the direction in which each crossover portion 45 straddles the border between the layers on the side of the first end of the stator core 2 (the direction from the 2·i-th layer toward the 2·i-1-th layer) is opposite from the direction in which the crossover portions 41 of the first to third segment coils 4a, 4b, 4c straddle the border between the layers on the side of the second end (opposite from the twisting side) of the stator core 2 (the direction from the 2·i-1-th layer toward the 2·i-th layer). When joining of the leading end portions of the corresponding leg portions 40 etc., has been completed, the first to fourth segment coils 4a, 4b, 4c, 4d have been wound by wave winding in the first layer and the second layer, the third layer and the fourth layer, and the fifth layer and the sixth layer.

As shown in FIG. 1, a portion of each fourth segment coil 4d that protrudes from the second end (opposite from the twisting side) of the stator core 2 extends obliquely along the crossover portion 41 of the second segment coil 4b or the fourth segment coil 4d that is adjacent thereto, and a leading end portion thereof extends parallel to the shaft center of the stator core 2. As shown in FIG. 4, the fourth segment coils 4d that are inserted in the first layers of the slots No. 5 and No. 6 and the sixth layers of the slots No. 6 and No. 7 are used as leader lines Pu1, Pu2, Pu3, Pu4 of the parallel coils U1, U2, U3, and U4, and protrude from the second end of the stator core 2 and are electrically connected to a power line of the U-phase through a busbar unit (not shown). As shown in FIG. 4, the fourth segment coils 4d that are inserted in the sixth layers of the slots No. 13 and No. 12 and the first layers of the slots No. 48 and No. 47 are used as neutral lines Nu1, Nu2, Nu3, Nu4 of the parallel coils U1, U2, U3, and U4, and protrude from the second end of the stator core 2 and are electrically connected to a neutral point through the busbar unit (not shown).

Further, as shown in FIG. 4, the leg portions 40 that are inserted in the first layers of the slots No. 9 and No. 10 and the sixth layers of the slots No. 10 and No. 11 are used as leader lines Pv1, Pv2, Pv3, Pv4 of the parallel coils V1, V2, V3, and V4, and protrude from the second end of the stator core 2 and are electrically connected to a power line of the V-phase through the busbar unit (not shown). As shown in FIG. 4, the leg portions 40 that are inserted in the sixth layers of the slots No. 17 and No. 16 and the first layers of the slots No. 4 and No. 3 are used as neutral lines Nv1, Nv2, Nv3, Nv4 of the parallel coils V1, V2, V3, and V4, and protrude from the second end of the stator core 2 and are electrically connected to the neutral point through the busbar unit (not shown). Further, as shown in FIG. 4, the leg portions 40 that are inserted in the first layers of the slots No. 1 and No. 2 and the sixth layers of the slots No. 14 and No. 15 are used as leader lines Pw1, Pw2, Pw3, Pw4 of the parallel coils W1, W2, W3, and W4, and protrude from the second end of the stator core 2 and are electrically connected to a power line of the W-phase through the busbar unit (not shown). As shown in FIG. 4, the leg portions 40 that are inserted in the sixth layers of the slots No. 9 and No. 8 and the first layers of the slots No. 8 and No. 7 are used as neutral lines Nw1, Nw2, Nw3, Nw4 of the parallel coils W1, W2, W3, and W4, and protrude from the second end of the stator core 2 and are electrically connected to the neutral point through the busbar unit (not shown). Thus, the stator coils 3u, 3v, 3w are wound on the stator core 2 by distributed winding.

In the stator coils 3u, 3v, 3w wound on the stator core 2, joint portions between the leading end portions of the large number of the leg portions 40 etc., are arrayed in predetermined numbers in the radial direction to provide an annular first coil end portion that protrudes toward an outer side from an end face of the stator core 2 on the side of the first end (twisting side). As described above, in the stator 1, the corresponding leg portions 40 etc., are joined together at a five-slot pitch on the side of the first end of the stator core 2, which allows this first coil end portion to be shorter in height (the amount of protrusion thereof from the end face of the stator core 2 on the side of the first end to be smaller).

Further, in the stator coils 3u, 3v, 3w, the crossover portions 41 of the first to third segment coils 4a, 4b, 4c provide an annular second coil end portion that protrudes toward an outer side from an end face of the stator core 2 on the side of the second end (opposite from the twisting side). In the second coil end portion, the crossover portions 41 of the second segment coils 4b straddle the crossover portions 41 of the first segment coils 4a. As the number of layers of the crossover portions 41 is restricted to two, an increase in the axial length of the stator 1 can be favorably avoided.

As has been described above, the stator 1 includes the first segment coils 4a each having the leg portions 40 that are inserted into two first slots 21 spaced six slots apart, the second segment coils 4b each having the leg portions 40 that are inserted into two second slots 22 lying on each side of the first slots 21 and spaced eight slots apart, and the third segment coils 4c each having the leg portions 40 that are inserted into predetermined first slot 21 and second slot 22 spaced seven slots apart. The leg portions 40 of each first segment coil 4a are inserted into the 2·i-1-th layer of one of the two first slots 21 that lies on the one side (winding end side) in the circumferential direction and into the 2·i-th layer of the other one so as to protrude from the first end of the stator core 2. The leg portions 40 of each second segment coil 4b are inserted into the 2·i-1-th layer of one of the two second slots 22 that lies on the one side in the circumferential direction and into the 2·i-th layer of the other one so as to protrude from the first end of the stator core 2, and each second segment coil 4b straddles the corresponding first segment coil 4a. The leg portions 40 of each third segment coil 4c are inserted into the 2·i-th layer of one of the predetermined first slot 21 and second slot 22 that lies on the other side (winding start side) opposite from the one side in the circumferential direction and into the 2·i + 1-th layer of the other one so as to protrude from the side of the first end of the stator core 2, and each third segment coil 4c provides a crossover between the 2·i-th layer and the 2·i + 1-th layer. Further, on the side of the first end of the stator core 2, each two of leg portions 40 that protrude from the 2·i-th layer of one of the first slot 21 and the second slot 22 spaced five slots apart that lies on the one side in the circumferential direction and from the 2·i-1-th layer of the other one are twisted and joined together at their leading end portions.

Thus, each of the parallel coils U1 to U4, V1 to V4, W1 to W4 is basically provided by inserting each second segment coil 4b into two second slots 22 spaced eight slots apart so as to straddle the first segment coil 4a that is inserted in two first slots 21 spaced six slots apart, and joining the corresponding leg portions 40 together at a five-slot pitch on the side of the first end of the stator core 2. In this way, even when the number of effective turns that is obtained by dividing the number of the leg portions 40 (the number of layers = 6) in one slot 20 by the number of the parallel coils U1 to U4 (parallel number = 4) is not an integer (in this embodiment, 1.5), a circulating current generated due to a deviation in the timing when an inductive voltage is generated in each magnetic pole of the parallel coils U1 to U4, V1 to V4, W1 to W4 as a magnet of the rotor passes can be canceled inside each of the parallel coils U1 to U4, V1 to V4, W1 to W4 to inhibit the circulating current from flowing through the stator coils 3u, 3v, 3w.

Description will be given by taking the parallel coil U1 as an example. In the parallel coil U1, eight magnetic poles are provided. As shown in FIG. 4, in a magnetic pole (winding) provided in the range from the slot No. 5 to the slot No. 13, the leg portions 40 and the fourth segment coils 4d are disposed evenly on both sides of a center of the magnetic pole (see the triangle in FIG. 4) in the circumferential direction (two in each of the slots No. 5 and No. 13, one in each of the slots No. 6 and No. 12). In a magnetic pole provided in the range from the slot No. 17 to the slot No. 25, also, the leg portions 40 are disposed evenly on both sides of a center of the magnetic pole in the circumferential direction (one in each of the slots No. 17 and No. 25, two in each of the slots No. 18 and No. 24). Further, in a magnetic pole provided in the range from the slot No. 29 to the slot No. 37, also, the leg portions 40 are disposed evenly on both sides of a center of the magnetic pole in the circumferential direction (two in each of the slots No. 29 and No. 37, one in each of the slots No. 30 and No. 36). In a magnetic pole provided in the range from the slot No. 41 to the slot No. 1, also, the leg portions 40 are disposed evenly on both sides of a center of the magnetic pole in the circumferential direction (one in each of the slots No. 41 and No. 1, two in each of the slots No. 42 and No. 48). Thus, in these magnetic poles, no deviation occurs in the timing when an inductive voltage is generated as a magnet passes.

On the other hand, in a magnetic pole provided in the range from the slot No. 12 to the slot No. 18, the leg portions 40 are disposed more densely on the other side (the winding start side; the left side in FIG. 4) of a center of the magnetic pole in the circumferential direction (one in each of the slots No. 12 and No. 17, two in each of the slots No. 13 and No. 18). In a magnetic pole provided in the range from the slot No. 36 to the slot No. 42, the leg portions 40 are disposed more densely on the other side of a center of the magnetic pole in the circumferential direction (one in each of the slots No. 36 and No. 41, two in each of the slots No. 37 and No. 42). Accordingly, in these magnetic poles, the timing when an inductive voltage is generated as a magnet passes deviates, for example, toward a retardation side. On the other hand, in a magnetic pole provided in the range from the slot No. 24 to the slot No. 30, the leg portions 40 are disposed more densely on the one side (winding end side; the right side in FIG. 4) of a center of the magnetic pole in the circumferential direction (two in each of the slots No. 24 and No. 29, one in each of the slots No. 25 and No. 30). Further, in a magnetic pole provided in the range from the slot No. 48 to the slot No. 6, the leg portions 40 and the fourth segment coils 4d are disposed more densely on the one side of a center of the magnetic pole in the circumferential direction (two in each of the slots No. 48 and No. 5, one in each of the slots No. 1 and No. 6). Accordingly, in these magnetic poles, the timing when an inductive voltage is generated as a magnet passes deviates, for example, toward an advance side. Thus, it would be understood that in the parallel coil U1, a circulating current due to a deviation in the timing of generation of an inductive voltage that occurs in the magnetic pole provided in the range from the slot No. 12 to the slot No. 18 and the magnetic pole provided in the range from the slot No. 36 to the slot No. 42, and a circulating current due to a deviation in the timing of generation of an inductive voltage that occurs in the magnetic pole provided in the range from the slot No. 24 to the slot No. 30 and the magnetic pole provided in the range from the slot No. 48 to the slot No. 6 can cancel each other. In the stator 1, as in the parallel coil U1, circulating currents due to the timing of generation of an inductive voltage can be canceled in each of the parallel coils U2 to U4, V1 to V4, W1 to W4.

In the stator 1, the leg portions 40 of the first to third segment coils 4a, 4b, 4c and the fourth segment coils 4d that provide one-phase stator coil 3u, 3v, or 3w are inserted into sets of three slots 20 adjacent to one another in the circumferential direction, and each of the stator coils 3u, 3v, 3w is wound on the stator core 2 by short-pitch winding. For example, in the U-phase stator coil 3u, as shown in FIG. 4, the leg portions 40 of the first to third segment coils 4a, 4b, 4c are inserted at a four-slot pitch such that 12 leg portions 40 are inserted into each set of the slots 20 No. 7, No. 6, and No. 5; the slots 20 No. 1, No. 47, and No. 48; the slots 20 No. 43, No. 42, and No. 41; the slots 20 No. 37, No. 36, and No. 35; the slots 20 No. 31, No. 30, and No. 29; the slots 20 No. 25, No. 24, and No. 23; the slots 20 No. 19, No. 18, and No. 17; and the slots 20 No. 13, No. 12, and No. 11. Thus, a rotating electrical machine including the stator 1 can achieve a higher output (power) and a reduction in vibration and noise compared with a rotating electrical machine including a stator in which stator coils are wound on a stator core by full-pitch winding. In addition, the stator 1 can eliminate the need for skew etc., for reducing torque ripple of degree of: degree 6 × the number of pole pairs (e.g., degree 24). As a result, even when the number of effective turns is not an integer, the stator 1 can inhibit generation of a circulating current and achieve a higher output of a rotating electrical machine as well as a reduction in vibration and noise thereof.

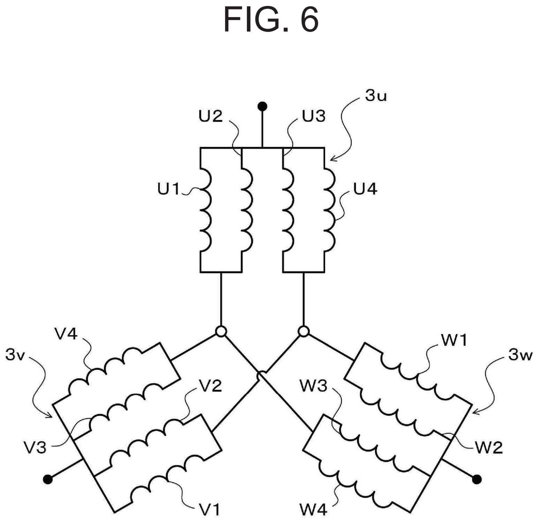

Further, each of the stator coils 3u, 3v, 3w includes the fourth segment coils 4d. Each fourth segment coil 4d is inserted into the first layer or the sixth layer (2·imax-th layer) of the predetermined first slot 21 or second slot 22 so as to protrude from both ends of the stator core 2. On the side of the first end of the stator core 2, each two of the fourth segment coil 4d and the leg portion 40 that protrude from the first slot 21 and the second slot 22 spaced five slots apart are twisted and joined together at their leading end portions. Some of the fourth segment coils 4d protrude from the second end opposite from the first end of the stator core 2 and are connected to the power line through which electricity is applied. Further, some of the fourth segment coils 4d protrude from the second end of the stator core 2 and are connected to the neutral point. Thus, the leader lines Pu1 to Pw4 and the neutral lines Nu1 to Nw4 can be concentrated on the side of the second end (opposite from the twisting side) of the stator core 2, and thereby routing of the power line etc., the structure of the busbar unit, etc., can be simplified. However, the stator coils 3u, 3v, 3w need not be necessarily connected in Y-connection and may instead be connected in delta connection. Alternatively, the stator coils 3u, 3v, 3w may be connected in open delta connection. Here, delta connection is one of connection methods for connecting a three-phase alternating-current power source and a load to each other. In delta connection, a phase voltage and a line voltage are equal while a line current is root three times a phase current. Open delta connection is one of connection methods for connecting a three-phase alternating-current power source and a load to each other, in which one end of delta connection is open. The stator coils 3u, 3v, 3w may be composed of the parallel coils U1 to U4, V1 to V4, W1 to W4 connected as shown in FIG. 6.

As can be seen from FIG. 1 and FIG. 4, in the stator 1, the fourth segment coils 4d that are used as the leader line Pu1 etc., and the neutral line Nu1 etc., can be concentrated in a relatively narrow range of the first coil end portion. Thus, in a case where a rotating electrical machine including the stator 1 is cooled by a cooling liquid (cooling oil), the stator 1 can be disposed inside a case etc., such that the leg portions 40 that are used as the leader line Pu1 etc., and the neutral line Nu1 etc., do not become dipped (immersed). As a result, the stator 1 can favorably achieve a reduction in the cost required for insulation of portions of the leader line Pu1 etc., and the neutral line Nu1 etc., where the conductor is exposed. In addition, in the stator 1, the leading end portions of the leg portions 40 etc., that are inserted in the sixth layer on the innermost circumferential side are not joined together, and the leg portions 40 etc., inserted into the sixth layer need not be shifted (projected) toward the shaft center of the center hole 2o. Therefore, the rotor can be mounted into the center hole 2o of the stator core 2 from both the side of the first end and the side of the second end of the stator core 2.

Further, in the stator 1, the number of layers 2·imax in each slot 20 may be an even number larger than 6, and the number of parallel coils in each of the stator coils 3u, 3v, 3w may be any multiple of 4 = 4·m (where "m" is an integer equal to or larger than 1). The combination of the number of layers 2·imax in each slot 20 and the number of parallel coils 4·m in each of the stator coils 3u, 3v, 3w (2·imax, 4·m) is not limited to (6, 4) in the above-described embodiment, and may instead be, for example, one of (10, 4), (14, 4), and (12, 8).

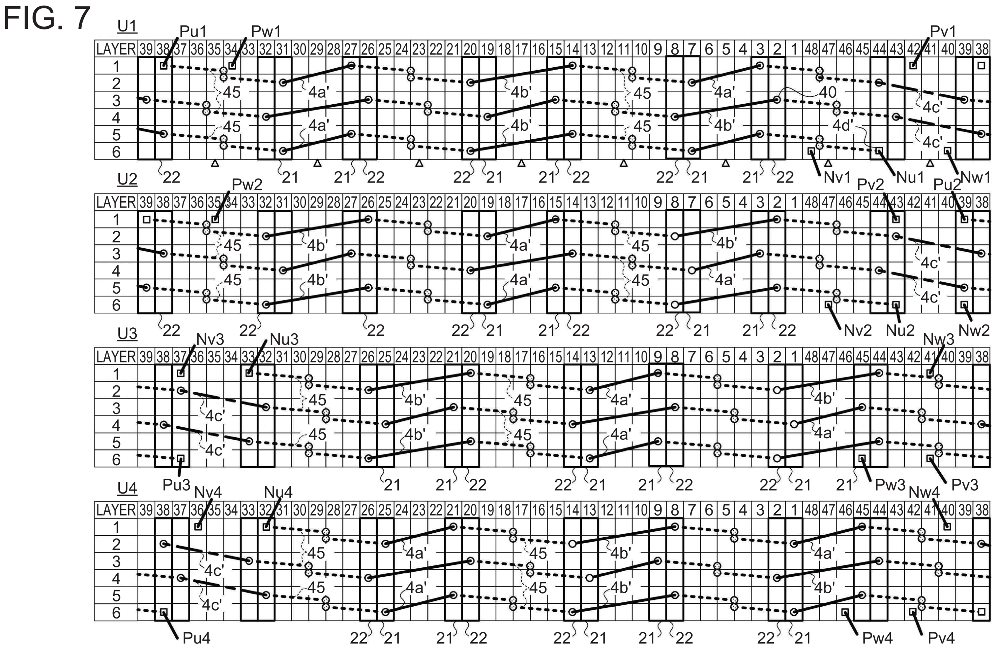

FIG. 7 is an explanatory view illustrating another aspect of mounting of the segment coils 4 onto the stator core 2 of the stator 1 that meets a relationship n = 6·p.

The stator coils 3u, 3v, 3w wound on the stator core 2 in the aspect shown in FIG. 7 are each provided by electrically joining first, second, third, and fourth segment coils 4a', 4b', 4c', 4d' together. The stator coil 3u includes the four parallel coils U1, U2, U3, and U4 that are electrically connected in parallel. Further, the stator coil 3v includes the four parallel coils V1, V2, V3, and V4 that are electrically connected in parallel to one another, and the stator coil 3w includes the four parallel coils W1, W2, W3, and W4 that are electrically connected in parallel to one another. The parallel coils U1 to U4, V1 to V4, and W1 to W4 are connected to one another in so-called 4Y-connection.

Two leg portions 40 of each of the first to third segment coils 4a', 4b', 4c' are each inserted into a different slot 20 from the side of the second end of the stator core 2 so as to protrude from the first end (the lower end in FIG. 1) of the stator core 2, and crossover portions 41 of the first to third segment coils 4a', 4b', 4c' are arrayed on the side of the second end of the stator core 2. The first to third segment coils 4a', 4b', 4c' are mounted onto the stator core 2 such that an even number of (here, six) leg portions 40 protrude from each of the slots 20 so as to be adjacent to one another in the radial direction. Further, a plurality of layers (in this embodiment, six layers) is each provided by the leg portions 40 that protrude from the respective slots 20 and lie adjacent to one another in the circumferential direction of the stator core 2.

As shown in FIG. 7, the leg portions 40 of each first segment coil 4a' (see the circles in FIG. 7) are inserted into a 2·i-1-th layer (where "i" is an integer equal to or larger than 1 and i = 1, ..., imax (in this embodiment, imax = 3)) of one of two first slots 21 spaced four slots apart that lies on the one side (winding end side) in the circumferential direction and into a 2·i-th layer of the other one from the side of the second end of the stator core 2 (the near side of the sheet plane of FIG. 7) so as to protrude from the first end of the stator core 2 (the far side of the sheet plane of FIG. 7). More specifically, as shown in FIG. 7, the leg portions 40 of the first segment coils 4a' that provide the parallel coil U1 of the stator coil 3u are inserted into the first layer of the slot No. 27 and the second layer of the slot No. 31; the first layer of the slot No. 3 and the second layer of the slot No. 7; the third layer of the slot No. 15 and the fourth layer of the slot No. 19; the fifth layer of the slot No. 27 and the sixth layer of the slot No. 31; and the fifth layer of the slot No. 3 and the sixth layer of the slot No. 7. As shown in FIG. 7, the leg portions 40 of the first segment coils 4a' that provide the parallel coil U2 are inserted into the first layer of the slot No. 15 and the second layer of the slot No. 19; the third layer of the slot No. 27 and the fourth layer of the slot No. 31; the third layer of the slot No. 3 and the fourth layer of the slot No. 7; and the fifth layer of the slot No. 15 and the sixth layer of the slot No. 19.

Further, as shown in FIG. 7, the leg portions 40 of the first segment coils 4a' that provide the parallel coil U3 are inserted into the first layer of the slot No. 9 and the second layer of the slot No. 13; the third layer of the slot No. 21 and the fourth layer of the slot No. 25; the third layer of the slot No. 45 and the fourth layer of the slot No. 1; and the fifth layer of the slot No. 9 and the sixth layer of the slot No. 13. As shown in FIG. 7, the leg portions 40 of the first segment coils 4a' that provide the parallel coil U4 are inserted into the first layer of the slot No. 21 and the second layer of the slot No. 25; the first layer of the slot No. 45 and the second layer of the slot No. 1; the third layer of the slot No. 9 and the fourth layer of the slot No. 13; the fifth layer of the slot No. 21 and the sixth layer of the slot No. 25; and the fifth layer of the slot No. 45 and the sixth layer of the slot No. 1.

The leg portions 40 of each second segment coil 4b' (see the circles in FIG. 7) are inserted into a 2·i-1-th layer of one of two second slots 22 lying on each side of the first slots 21 and spaced six slots apart that lies on the one side (winding end side) in the circumferential direction and into a 2·i-th layer of the other one from the side of the second end of the stator core 2 so as to protrude from the first end of the stator core 2, and the crossover portion (not shown) of each second segment coil 4b' straddles the crossover portion (not shown) of the corresponding first segment coil 4a'. More specifically, as shown in FIG. 7, the leg portions 40 of the second segment coils 4b' that provide the parallel coil U1 of the stator coil 3u are inserted into the first layer of the slot No. 14 and the second layer of the slot No. 20; the third layer of the slot No. 26 and the fourth layer of the slot No. 32; the third layer of the slot No. 2 and the fourth layer of the slot No. 8; and the fifth layer of the slot No. 14 and the sixth layer of the slot No. 20. As shown in FIG. 7, the leg portions 40 of the second segment coils 4b' that provide the parallel coil U2 are inserted into the first layer of the slot No. 26 and the second layer of the slot No. 32; the first layer of the slot No. 2 and the second layer of the slot No. 8; the third layer of the slot No. 14 and the fourth layer of the slot No. 20; the fifth layer of the slot No. 26 and the sixth layer of the slot No. 32; and the fifth layer of the slot No. 2 and the sixth layer of the slot No. 8.

Further, as shown in FIG. 7, the leg portions 40 of the second segment coils 4b' that provide the parallel coil U3 are inserted into the first layer of the slot No. 20 and the second layer of the slot No. 26; the first layer of the slot No. 44 and the second layer of the slot No. 2; the third layer of the slot No. 8 and the fourth layer of the slot No. 14; the fifth layer of the slot No. 20 and the sixth layer of the slot No. 26; and the fifth layer of the slot No. 44 and the sixth layer of the slot No. 2. As shown in FIG. 7, the leg portions 40 of the second segment coils 4b' that provide the parallel coil U4 are inserted into the first layer of the slot No. 8 and the second layer of the slot No. 14; the third layer of the slot No. 20 and the fourth layer of the slot No. 26; the third layer of the slot No. 44 and the fourth layer of the slot No. 2; and the fifth layer of the slot No. 8 and the sixth layer of the slot No. 14.

The leg portions 40 of each third segment coil 4c' (see the circles in FIG. 7) are inserted into a 2·i-th layer of one of predetermined first slot 21 and second slot 22 spaced five slots apart that lies on the other side (winding start side) opposite from the one side in the circumferential direction and into a 2·i + 1-th layer of the other one so as to protrude from the first end of the stator core 2, and each third segment coil 4c' provides a crossover between the 2·i-th layer and the 2·i + 1-th layer. That is, the parallel coil U1 of the stator coil 3u includes two third segment coils 4c'. As shown in FIG. 7, the leg portions 40 of one of the third segment coils 4c' of the parallel coil U1 are inserted into the second layer of the slot No. 44 and the third layer of the slot No. 39 and provide a crossover between the second layer (2·i-th layer) and the third layer (2·i + 1-th layer). As shown in FIG. 7, the leg portions 40 of the other one of the third segment coils 4c' of the parallel coil U1 are inserted into the fourth layer of the slot No. 43 and the fifth layer of the slot No. 38 and provide a crossover between the fourth layer (2·i-th layer) and the fifth layer (2·i + 1-th layer).

The parallel coil U2 of the stator coil 3u includes two third segment coils 4c'. As shown in FIG. 7, the leg portions 40 of one of the third segment coils 4c' of the parallel coil U2 are inserted into the second layer of the slot No. 43 and the third layer of the slot No. 38, and provide a crossover between the second layer (2·i-th layer) and the third layer (2·i + 1-th layer). As shown in FIG. 7, the leg portions 40 of the other one of the third segment coils 4c' of the parallel coil U2 are inserted into the fourth layer of the slot No. 44 and the fifth layer of the slot No. 39, and provide a crossover between the fourth layer (2·i-th layer) and the fifth layer (2·i + 1-th layer). The parallel coil U3 of the stator coil 3u includes two third segment coils 4c'. As shown in FIG. 7, the leg portions 40 of one of the third segment coils 4c' of the parallel coil U3 are inserted into the second layer of the slot No. 37 and the third layer of the slot No. 32, and provide a crossover between the second layer (2·i-th layer) and the third layer (2·i + 1-th layer). As shown in FIG. 7, the leg portions 40 of the other one of the third segment coils 4c' of the parallel coil U3 are inserted into the fourth layer of the slot No. 38 and the fifth layer of the slot No. 33, and provide a crossover between the fourth layer (2·i-th layer) and the fifth layer (2·i + 1-th layer). The parallel coil U4 of the stator coil 3u includes two third segment coils 4c'. As shown in FIG. 7, the leg portions 40 of one of the third segment coils 4c' of the parallel coil U4 are inserted into the second layer of the slot No. 38 and the third layer of the slot No. 33, and provide a crossover between the second layer (2·i-th layer) and the third layer (2·i + 1-th layer). As shown in FIG. 7, the leg portions 40 of the other one of the third segment coils 4c' of the parallel coil U4 are inserted into the fourth layer of the slot No. 37 and the fifth layer of the slot No. 32, and provide a crossover between the fourth layer (2·i-th layer) and the fifth layer (2·i + 1-th layer).

The first to third segment coils 4a', 4b', 4c' providing the parallel coils V1 to V4 of the stator coil 3v are mounted so as to be offset by four slots in the circumferential direction (leftward in FIG. 7) with respect to the first to third segment coils 4a', 4b', 4c' providing the parallel coils U1 to U4 of the U-phase. The first to third segment coils 4a', 4b', 4c' providing the parallel coils W1, W2 of the stator coil 3w are mounted so as to be offset by four slots toward the opposite side from the parallel coils V1, V2 in the circumferential direction with respect to the first to third segment coils 4a', 4b', 4c' providing the parallel coils U1, U2 of the U-phase. Further, the first to third segment coils 4a', 4b', 4c' providing the parallel coils W3, W4 of the stator coil 3w are mounted so as to be offset toward the opposite side from the parallel coils U1, U2 in the circumferential direction with respect to the first to third segment coils 4a', 4b', 4c' providing the parallel coils V3, V4 of the V-phase.

As can be seen from FIG. 7, the inclination directions of the crossover portions 41 (crank portions 42) of the first and second segment coils 4a', 4b' with respect to the radial direction of the stator core 2 are the same directions. On the other hand, as can be seen from FIG. 7, the inclination directions of the crossover portions 41 (crank portions 42) of the third segment coils 4c' with respect to the radial direction of the stator core 2 are opposite directions from the first and second segment coils 4a', 4b'. As can be seen from FIG. 7, in this embodiment, the first and second segment coils 4a', 4b' include three types of segment coils that are different from one another in the interval of the leg portions 40 in the circumferential direction etc., and the third segment coils 4c' include two types of segment coils that are different from each other in the interval of the leg portions 40 in the circumferential direction etc.

Each fourth segment coil 4d' (see the squares in FIG. 7) is inserted into the first layer or the sixth layer (2·imax-th layer) of a predetermined first slot 21 or second slot 22 so as to protrude from both ends of the stator core 2. In this embodiment, the parallel coils U1 to U4, V1 to V4, W1 to W4 of the stator coil 3u each include two fourth segment coils 4d'. The fourth segment coils 4d' of the parallel coil U1 are inserted into the first layer of the slot No. 38 and the sixth layer of the slot No. 44. The fourth segment coils 4d' of the parallel coil U2 are inserted into the first layer of the slot No. 39 and the sixth layer of the slot No. 43. The fourth segment coils 4d' of the parallel coil U3 are inserted into the first layer of the slot No. 33 and the sixth layer of the slot No. 37. The fourth segment coils 4d' of the parallel coil U4 are inserted into the first layer of the slot No. 32 and the sixth layer of the slot No. 38.

The fourth segment coils 4d' of the parallel coil V1 are inserted into the first layer of the slot No. 42 and the sixth layer of the slot No. 48. The fourth segment coils 4d' of the parallel coil V2 are inserted into the first layer of the slot No. 43 and the sixth layer of the slot No. 47. The fourth segment coils 4d' of the parallel coil V3 are inserted into the first layer of the slot No. 4 and the sixth layer of the slot No. 10. The fourth segment coils 4d' of the parallel coil V4 are inserted into the first layer of the slot No. 3 and the sixth layer of the slot No. 11. The fourth segment coils 4d' of the parallel coil W1 are inserted into the first layer of the slot No. 34 and the sixth layer of the slot No. 40. The fourth segment coils 4d' of the parallel coil W2 are inserted into the first layer of the slot No. 43 and the sixth layer of the slot No. 47. The fourth segment coils 4d' of the parallel coil W3 are inserted into the first layer of the slot No. 41 and the sixth layer of the slot No. 45. The fourth segment coils 4d' of the parallel coil W4 are inserted into the first layer of the slot No. 40 and the sixth layer of the slot No. 46.

After completion of mounting of the first to fourth segment coils 4a', 4b', 4c', 4d' onto the stator core 2, the leg portions 40 of the first to third segment coils 4a', 4b', 4c' and the fourth segment coils 4d' that protrude from the first end (twisting side) of the stator core 2 are subjected to a twisting process using a twisting device (not shown). The leg portions 40 of each of the first to third segment coils 4a', 4b', 4c' are twisted toward opposite sides (see the broken lines in FIG. 7) so as to be away from each other in the circumferential direction. A portion of each fourth segment coil 4d' that protrudes from the first end (twisting side) of the stator core 2 is twisted toward the leg portion 40 of the corresponding first or second segment coil 4a' or 4b' that is twisted after protruding from one of the first slot 21 and the second slot 22 spaced seven slots apart.

Further, as can be seen from FIG. 7, on the side of the first end of the stator core 2, the leading end portions of each two of the leg portions 40 of the first to third segment coils 4a', 4b', 4c' that are twisted after protruding from the 2·i-th layer of one of the first slot 21 and the second slot 22 spaced seven slots apart that lies on the one side (winding end side) in the circumferential direction and from the 2·i-1-th layer of the other one (e.g., the second layer of the slot No. 7 and the first layer of the slot No. 14) are electrically joined together by welding. On the side of the first end of the stator core 2, the leading end portions of the fourth segment coil 4d' and the leg portion 40 that are twisted after protruding from the first slot 21 and the second slot 22 spaced seven slots apart are electrically joined together by welding. Before the welding, the insulation film is removed from the leading end portion of each leg portion 40 etc., so as to expose the conductor.

Thus, a plurality of crossover portions 45 that each connects the leading end portions of the corresponding two leg portions 40 of the first to third segment coils 4a', 4b', 4c' is provided on the side of the first end of the stator core 2. As can be seen from FIG. 7, the direction in which each crossover portion 45 straddles the border between the layers on the side of the first end of the stator core 2 (the direction from the 2·i-th layer toward the 2·i-1-th layer) is opposite from the direction in which the crossover portions 41 of the first to third segment coils 4a', 4b', 4c' straddle the border between the layers on the side of the second end (opposite from the twisting side) of the stator core 2 (the direction from the 2·i-1-th layer toward the 2·i-th layer). When joining of the leading end portions of the corresponding leg portions 40 etc., has been completed, the first to fourth segment coils 4a', 4b', 4c', 4d' have been wound by wave winding in the first layer and the second layer, the third layer and the fourth layer, and the fifth layer and the sixth layer.

A portion of each fourth segment coil 4d' that protrudes from the second end (opposite from the twisting side) of the stator core 2 extends obliquely along the crossover portion 41 of the second segment coil 4b' or the fourth segment coil 4d' that is adjacent thereto, and the leading end portion thereof extends parallel to the shaft center of the stator core 2 (see FIG. 1). As shown in FIG. 7, the fourth segment coils 4d' that are inserted in the first layers of the slots No. 38 and No. 39 and the sixth layers of the slots No. 37 and No. 38 are used as the leader lines Pu1, Pu2, Pu3, Pu4 of the parallel coils U1, U2, U3, and U4, and protrude from the second end of the stator core 2 and are electrically connected to the power line of the U-phase through the busbar unit (not shown). As shown in FIG. 7, the fourth segment coils 4d' that are inserted in the sixth layers of the slots No. 44 and No. 43 and the first layers of the slots No. 33 and No. 32 are used as the neutral lines Nu1, Nu2, Nu3, Nu4 of the parallel coils U1, U2, U3, and U4, and protrude from the second end of the stator core 2 and are electrically connected to the neutral point through the busbar unit (not shown).

Further, as shown in FIG. 7, the leg portions 40 that are inserted in the first layers of the slots No. 42 and No. 43 and the sixth layers of the slots No. 41 and No. 42 are used as the leader lines Pv1, Pv2, Pv3, Pv4 of the parallel coils V1, V2, V3, and V4, and protrude from the second end of the stator core 2 and are electrically connected to the power line of the V-phase through the busbar unit (not shown). As shown in FIG. 7, the leg portions 40 that are inserted in the sixth layers of the slots No. 48 and No. 47 and the first layers of the slots No. 37 and No. 36 are used as the neutral lines Nv1, Nv2, Nv3, Nv4 of the parallel coils V1, V2, V3, and V4, and protrude from the second end of the stator core 2 and are electrically connected to the neutral point through the busbar unit (not shown). Further, as shown in FIG. 7, the leg portions 40 that are inserted in the first layers of the slots No. 34 and No. 35 and the sixth layers of the slots No. 45 and No. 44 are used as the leader lines Pw1, Pw2, Pw3, Pw4 of the parallel coils W1, W2, W3, and W4, and protrude from the second end of the stator core 2 and are electrically connected to the power line of the W-phase through the busbar unit (not shown). As shown in FIG. 7, the leg portions 40 that are inserted in the sixth layers of the slots No. 40 and No. 39 and the first layers of the slots No. 41 and No. 40 are used as the neutral lines Nw1, Nw2, Nw3, Nw4 of the parallel coils W1, W2, W3, and W4, and protrude from the second end of the stator core 2 and are electrically connected to the neutral point through the busbar unit (not shown). Thus, the stator coils 3u, 3v, 3w are wound on the stator core 2 by distributed winding.

In the stator coils 3u, 3v, 3w wound on the stator core 2 in the aspect shown in FIG. 7, joint portions between the leading end portions of the large number of leg portions 40 etc., are arrayed in predetermined numbers in the radial direction to provide an annular first coil end portion that protrudes from the end face of the stator core 2 on the side of the first end (twisting side) toward the outer side. In the stator coils 3u, 3v, 3w wound on the stator core 2 in the aspect shown in FIG. 7, the crossover portions 41 of the first to third segment coils 4a', 4b', 4c' provide an annular second coil end portion that protrudes from the end face of the stator core 2 on the side of the second end (opposite from the twisting side) toward the outer side. In the second coil end portion, the crossover portions 41 of the second segment coils 4b' straddle the crossover portions 41 of the first segment coils 4a'. As the number of layers of the crossover portions 41 is restricted to two, an increase in the axial length of the stator 1 that adopts the aspect shown in FIG. 7 can be favorably avoided.

As has been described above, the stator 1 that adopts the aspect shown in FIG. 7 includes the first segment coils 4a' each having the leg portions 40 that are inserted into two first slots 21 spaced four slots apart, the second segment coils 4b' each having the leg portions 40 that are inserted into two second slots 22 lying on each side of the first slots 21 and spaced six slots apart, and the third segment coils 4c' each having the leg portions 40 that are inserted into predetermined first slot 21 and second slot 22 spaced five slots apart. The leg portions 40 of each first segment coil 4a' are inserted into the 2·i-1-th layer of one of the two first slots 21 that lies on the one side (winding end side) in the circumferential direction and into the 2·i-th layer of the other one so as to protrude from the first end of the stator core 2. The leg portions 40 of each second segment coil 4b' are inserted into the 2·i-1-th layer of one of the two second slots 22 that lies on the one side in the circumferential direction and into the 2·i-th layer of the other one so as to protrude from the first end of the stator core 2, and each second segment coil 4b' straddles the corresponding first segment coil 4a'. The leg portions 40 of each third segment coil 4c' are inserted into the 2·i-th layer of one of the predetermined first slot 21 and second slot 22 that lies on the other side (winding start side) opposite from the one side in the circumferential direction and into the 2·i + 1-th layer of the other one so as to protrude from the first end of the stator core 2, and each third segment coil 4c' provides a crossover between the 2·i-th layer and the 2·i + 1-th layer. Further, on the side of the first end of the stator core 2, each two of leg portions 40 that protrude from the 2·i-th layer of one of the first slot 21 and the second slot 22 spaced seven slots apart that lies on the one side in the circumferential direction and from the 2·i-1-th layer of the other one are twisted and joined together at their leading end portions.

Thus, each of the parallel coils U1 to U4, V1 to V4, W1 to W4 shown in FIG. 7 is basically provided by inserting each second segment coil 4b' into two second slots 22 spaced six slots apart so as to straddle the first segment coil 4a' that is inserted in two first slots 21 spaced four slots apart, and joining the corresponding leg portions 40 together at a seven-slot pitch on the side of the first end of the stator core 2. In this way, even when the number of effective turns that is obtained by dividing the number of the leg portions 40 (the number of layers = 6) in one slot 20 by the number of the parallel coils U1 to U4 (parallel number = 4) is not an integer (in this embodiment, 1.5), a circulating current generated due to a deviation in the timing when an inductive voltage is generated in each magnetic pole of the parallel coils U1 to U4, V1 to V4, W1 to W4 as a magnet of the rotor passes can be canceled inside each of the parallel coils U1 to U4, V1 to V4, W1 to W4 to inhibit the circulating current from flowing through the stator coils 3u, 3v, 3w.

Description will be given by taking the parallel coil U1 as an example. In the parallel coil U1, eight magnetic poles are provided. As shown in FIG. 7, in a magnetic pole (winding) provided in the range from the slot No. 38 to the slot No. 44, the leg portions 40 and the fourth segment coils 4d' are disposed evenly on both sides of a center of the magnetic pole (see the triangle in FIG. 7) in the circumferential direction (two in each of the slots No. 38 and No. 44, one in each of the slots No. 39 and No. 43). In a magnetic pole provided in the range from the slot No. 2 to the slot No. 8, also, the leg portions 40 are disposed evenly on both sides of a center of the magnetic pole in the circumferential direction (one in each of the slots No. 2 and No. 8, two in each of the slots No. 3 and No. 7). Further, in a magnetic pole provided in the range from the slot No. 14 to the slot No. 20, also, the leg portions 40 are disposed evenly on both sides of a center of the magnetic pole in the circumferential direction (two in each of the slots No. 14 and No. 20, one in each of the slots No. 15 and No. 19). In a magnetic pole provided in the range from the slot No. 26 to the slot No. 32, also, the leg portions 40 are disposed evenly on both sides of a center of the magnetic pole in the circumferential direction (one in each of the slots No. 26 and No. 32, two in each of the slots No. 27 and No. 31). Thus, in these magnetic poles, no deviation occurs in the timing when an inductive voltage is generated as a magnet passes.

On the other hand, in a magnetic pole provided in the range from the slot No. 43 to the slot No. 3, the leg portions 40 etc., are disposed more densely on the other side (the winding start side; the left side in FIG. 7) of a center of the magnetic pole in the circumferential direction (one in each of the slots No. 43 and No. 2, two in each of the slots No. 44 and No. 3). In a magnetic pole provided in the range from the slot No. 19 to the slot No. 27, the leg portions 40 are disposed more densely on the other side of a center of the magnetic pole in the circumferential direction (one in each of the slots No. 19 and No. 26, two in each of the slots No. 20 and No. 27). Accordingly, in these magnetic poles, the timing when an inductive voltage is generated as a magnet passes deviates, for example, toward a retardation side. On the other hand, in a magnetic pole provided in the range from the slot No. 7 to the slot No. 15, the leg portions 40 are disposed more densely on the one side (the winding end side; the right side in FIG. 7) of a center the magnetic pole in the circumferential direction (two in each of the slots No. 7 and No. 14, one in each of the slots No. 8 and No. 15). Further, in a magnetic pole provided in the range from the slot No. 31 to the slot No. 39, the leg portions 40 and the fourth segment coils 4d' are disposed more densely on the one side of a center of the magnetic pole in the circumferential direction (two in each of the slots No. 31 and No. 38, one in each of the slots No. 32 and No. 39). Accordingly, in these magnetic poles, the timing when an inductive voltage is generated as a magnet passes deviates, for example, toward an advance side. Thus, it would be understood that in the parallel coil U1, a circulating current due to a deviation in the timing of generation of an inductive voltage that occurs in the magnetic pole provided in the range from the slot No. 43 to the slot No. 3 and the magnetic pole provided in the range from the slot No. 19 to the slot No. 27, and a circulating current due to a deviation in the timing of generation of an inductive voltage that occurs in the magnetic pole provided in the range from the slot No. 7 to the slot No. 15 and the magnetic pole provided in the range from the slot No. 31 to the slot No. 39 can cancel each other. In the aspect shown in FIG. 7, as in the parallel coil U1, circulating currents due to the timing of generation of an inductive voltage can be canceled in each of the parallel coils U2 to U4, V1 to V4, W1 to W4.

In the stator 1 that adopts the aspect shown in FIG. 7, the leg portions 40 of the first to third segment coils 4a', 4b', 4c' and the fourth segment coils 4d' that provide one-phase stator coil 3u, 3v, or 3w are inserted into sets of three slots 20 adjacent to one another in the circumferential direction, and each of the stator coils 3u, 3v, 3w is wound on the stator core 2 by short-pitch winding. For example, in the U-phase stator coil 3u, as shown in FIG. 7, the leg portions 40 of the first to third segment coils 4a', 4b', 4c' are inserted at a four-slot pitch such that 12 leg portions 40 are inserted into each set of the slots 20 No. 39, No. 38, and No. 37; the slots 20 No. 33, No. 32, and No. 31; the slots 20 No. 27, No. 26, and No. 25; the slots 20 No. 21, No. 20, and No. 19; the slots 20 No. 15, No. 14, and No. 13; the slots 20 No. 9, No. 8, and No. 7; the slots 20 No. 3, No. 2, and No. 1; and the slots 20 No. 45, No. 44, and No. 43. Thus, a rotating electrical machine including the stator 1 that adopts the aspect shown in FIG. 7 can achieve a higher output (power) and a reduction in vibration and noise compared with a rotating electrical machine including a stator in which stator coils are wound on a stator core by full-pitch winding. In addition, the aspect shown in FIG. 7 can eliminate the need for skew etc., for reducing torque ripple of degree of: degree 6 × the number of pole pairs (e.g., degree 24). As a result, even when the number of effective turns is not an integer, the stator 1 that adopts the aspect shown in FIG. 7 can inhibit generation of a circulating current and achieve a higher output of a rotating electrical machine as well as a reduction in vibration and noise thereof.

Further, each of the stator coils 3u, 3v, 3w shown in FIG. 7 includes the fourth segment coils 4d'. Each fourth segment coil 4d' is inserted into the first layer or the sixth layer (2·imax-th layer) of the predetermined first slot 21 or second slot 22 so as to protrude from both ends of the stator core 2. On the side of the first end of the stator core 2, the fourth segment coil 4d' and the leg portion 40 that protrude from the first slot 21 and the second slot 22 spaced seven slots apart are twisted and joined together at their leading end portions. Some of the fourth segment coils 4d' protrude from the second end opposite from the first end of the stator core 2 and are connected to the power line through which electricity is applied. Further, some of the fourth segment coils 4d' protrude from the second end of the stator core 2 and are connected to the neutral point. Thus, the leader lines Pu1 to Pw4 and the neutral lines Nu1 to Nw4 can be concentrated on the side of the second end (opposite from the twisting side) of the stator core 2, and thereby routing of the power line etc., the structure of the busbar unit, etc., can be simplified. However, in the stator 1 that adopts the aspect shown in FIG. 7, the stator coils 3u, 3v, 3w need not be necessarily connected in Y-connection and may instead be connected in delta connection. Alternatively, the stator coils 3u, 3v, 3w may be connected in open delta connection. The stator coils 3u, 3v, 3w may be composed of the parallel coils U1 to U4, V1 to V4, W1 to W4 connected as shown in FIG. 6.

In the aspect shown in FIG. 7, also, the fourth segment coils 4d' that are used as the leader line Pu1 etc., and the neutral line Nu1 etc., can be concentrated in a relatively narrow range of the first coil end portion. Thus, in a case where a rotating electrical machine including the stator 1 that adopts the aspect shown in FIG. 7 is cooled by a cooling liquid (cooling oil), the stator 1 can be disposed inside a case etc., such that the leg portions 40 that are used as the leader line Pu1 etc., and the neutral line Nu1 etc., do not become dipped (immersed). As a result, the stator 1 that adopts the aspect shown in FIG. 7 can favorably achieve a reduction in the cost required for insulation of portions of the leader line Pu1 etc., and the neutral line Nu1 etc., where the conductor is exposed. In addition, in the stator 1 that adopts the aspect shown in FIG. 7, the leading end portions of the leg portions 40 etc., that are inserted in the sixth layer on the innermost circumferential side are not joined, and the leg portions 40 etc., inserted into the sixth layer need not be shifted (projected) toward the shaft center of the center hole 2o. Therefore, the rotor can be mounted into the center hole 2o of the stator core 2 from both the side of the first end and the side of the second end of the stator core 2.

Further, in the stator 1 that adopts the aspect shown in FIG. 7, the number of layers 2·imax in each slot 20 may be an even number larger than 6, and the number of parallel coils in each of the stator coils 3u, 3v, 3w may be any multiple of 4 = 4·m (where "m" is an integer equal to or larger than 1). The combination of the number of layers 2·imax in each slot 20 and the number of parallel coils 4·m in each of the stator coils 3u, 3v, 3w (2·imax, 4·m) is not limited to (6, 4) in the above-described embodiment, and may instead be, for example, one of (10, 4), (14, 4), and (12, 8).

It goes without saying that the invention of the present disclosure is in no way limited to the above-described embodiment and that various changes can be made within an extensional scope of the present disclosure. Further, the above-described embodiment is merely one specific form of the invention described in the section SUMMARY OF THE INVENTION, and is not intended to limit the elements of the invention described in the section SUMMARY OF THE INVENTION.

The invention of the present disclosure can be used in the stator manufacturing industry etc.

## Claims

1. A stator (1) comprising:
a stator core (2) including a plurality of slots (20) provided at intervals in a circumferential direction so as to each extend in a radial direction; and
a plurality of segment coils (4) which each includes a pair of leg portions (40) each inserted into a different one of the slots (20) and of which leading end portions of the corresponding leg portions (40) are electrically joined together to provide a plurality of stator coils (3u, 3v, 3w), wherein:
when the number of poles is "p" and the number of the slots (20) is "n," n = 6·p is met;
when an integer equal to or larger than 1 is "m," the stator coils (3u, 3v, 3w) each include 4·m parallel coils that are connected in parallel;
an even number of the leg portions (40) are inserted into each of the slots (20) in a row in the radial direction;
the segment coils (4) include a first segment coil (4a), a second segment coil (4b), and a third segment coil (4c), wherein: (i) the first segment coil (4a) is inserted into a 2·i-1-th layer of one of two first slots (21) spaced six slots (20) apart that lies on one side in the circumferential direction and into a 2·i-th layer of the other one such that the leg portions (40) protrude from a first end of the stator core (2), where "i" is an integer equal to or larger than 1 and i = 1, ..., imax; (ii) the second segment coil (4b) is inserted into a 2·i-1-th layer of one of two second slots (22) lying on each side of the first slots (21) and spaced eight slots (20) apart that lies on the one side in the circumferential direction and into a 2·i-th layer of the other one such that the leg portions (40) protrude from the first end of the stator core (2), and straddles the corresponding first segment coil (4a); and (iii) the third segment coil (4c) is inserted into a 2·i-th layer of one of predetermined first slot (21) and second slot (22) spaced seven slots (20) apart that lies on the other side opposite from the one side in the circumferential direction and into a 2·i + 1-th layer of the other one such that the leg portions (40) protrude from the first end of the stator core (2), and provides a crossover between the 2·i-th layer and the 2·i + 1-th layer; and
on a side of the first end of the stator core (2), each two of the leg portions (40) that protrude from the 2·i-th layer of one of the first slot (21) and the second slot (22) spaced five slots (20) apart and from the 2·i-1-th layer of the other one are twisted and joined together at leading end portions.

2. The stator (1) according to claim 1, wherein:
the segment coils (4) include a plurality of fourth segment coils (4d) that is each inserted into a first layer or a 2·imax-th layer of a predetermined first slot (21) or second slot (22) so as to protrude from both ends of the stator core (2);
on the side of the first end of the stator core (2), each two of the fourth segment coil (4d) and the leg portion (40) that protrude from the first slot (21) and the second slot (22) spaced five slots (20) apart are twisted and joined together at leading end portions; and
some of the fourth segment coils (4d) protrude from a second end opposite from the first end of the stator core (2) and are connected to a power line through which electricity is applied.

3. The stator (1) according to claim 2, wherein:
the stator coils (3u, 3v, 3w) are connected in Y-connection; and
some of the fourth segment coils (4d) protrude from the second end of the stator core (2) and are connected to a neutral point.

4. The stator (1) according to claim 2, wherein:
the stator coils (3u, 3v, 3w) are connected in delta connection; and
some of the fourth segment coils (4d) protrude from the second end of the stator core (2) and are connected to a neutral point.

5. The stator (1) according to claim 2, wherein:
the stator coils (3u, 3v, 3w) are connected in open delta connection; and
some of the fourth segment coils (4d) protrude from the second end of the stator core (2) and are connected to a neutral point.

6. The stator (1) according to claim 1 or 2, wherein a combination of the number of layers 2·imax in the slot (20) and the number of the parallel coils 4·m (2·imax, 4·m) is one of (6, 4), (10, 4), (14, 4), and (12, 8).

7. A stator (1) comprising:
a stator core (2) including a plurality of slots (20) provided at intervals in a circumferential direction so as to each extend in a radial direction; and
a plurality of segment coils (4) which each includes a pair of leg portions (40) each inserted into a different one of the slots (20) and of which leading end portions of the corresponding leg portions (40) are electrically joined together to provide a plurality of stator coils (3u, 3v, 3w), wherein:
when the number of poles is "p" and the number of the slots (20) is "n," n = 6·p is met;
when an integer equal to or larger than 1 is "m," the stator coils (3u, 3v, 3w) each include 4·m parallel coils that are connected in parallel;
an even number of the leg portions (40) are inserted into each of the slots (20) in a row in the radial direction, and the segment coils (4) include a first segment coil (4a'), a second segment coil (4b'), and a third segment coil (4c'), wherein: (i) the first segment coil (4a') is inserted into a 2·i-1-th layer of one of two first slots (21) spaced four slots (20) apart that lies on one side in the circumferential direction and into a 2·i-th layer of the other one such that the leg portions (40) protrude from a first end of the stator core (2), where "i" is an integer equal to or larger than 1 and i = 1, ..., imax; (ii) the second segment coil (4b') is inserted into a 2·i-1-th layer of one of two second slots (22) lying on each side of the first slots (21) and spaced six slots (20) apart that lies on the one side in the circumferential direction and into a 2·i-th layer of the other one such that the leg portions (40) protrude from the first end of the stator core (2), and straddles the corresponding first segment coil (4a'); and (iii) the third segment coil (4c') is inserted into a 2·i-th layer of one of predetermined first slot (21) and second slot (22) spaced five slots (20) apart that lies on the other side opposite from the one side in the circumferential direction and into a 2·i + 1-th layer of the other one such that the leg portions (40) protrude from the first end of the stator core (2), and provides a crossover between the 2·i-th layer and the 2·i + 1-th layer; and
on a side of the first end of the stator core (2), each two of the leg portions (40) that protrude from the 2·i-th layer of one of the first slot (21) and the second slot (22) spaced seven slots (20) apart and from the 2·i-1-th layer of the other one are twisted and joined together at leading end portions.

8. The stator (1) according to claim 7, wherein:
the segment coils (4) include a plurality of fourth segment coils (4d') that is each inserted into a first layer or a 2·imax-th layer of a predetermined first slot (21) or second slot (22) so as to protrude from both ends of the stator core (2);
on the side of the first end of the stator core (2), each two of the fourth segment coil (4d') and the leg portion (40) that protrude from the first slot (21) and the second slot (22) spaced five slots (20) apart are twisted and joined together at leading end portions; and some of the fourth segment coils (4d') protrude from a second end opposite from the first end of the stator core (2) and are connected to a power line through which electricity is applied.

9. The stator (1) according to claim 8, wherein:
the stator coils (3u, 3v, 3w) are connected in Y-connection; and
some of the fourth segment coils (4d') protrude from the second end of the stator core (2) and are connected to a neutral point.

10. The stator (1) according to claim 8, wherein:
the stator coils (3u, 3v, 3w) are connected in delta connection; and
some of the fourth segment coils (4d') protrude from the second end of the stator core (2) and are connected to a neutral point.

11. The stator (1) according to claim 8, wherein:
the stator coils (3u, 3v, 3w) are connected in open delta connection; and
some of the fourth segment coils (4d') protrude from the second end of the stator core (2) and are connected to a neutral point.

12. The stator (1) according to claim 7 or 8, wherein a combination of the number of layers 2·imax in the slot (20) and the number of the parallel coils 4·m (2·imax, 4·m) is one of (6, 4), (10, 4), (14, 4), and (12, 8).
